Europäisches Patentamt

European Patent Office

Office européen des brevets

(19)

(11) Numéro de publication: **0 235 634**
**B1**

(12) **FASCICULE DE BREVET EUROPEEN**

(45) Date de publication du fascicule du brevet:
31.10.90

(51) Int. Cl.⁵: **G02F 1/137**

(21) Numéro de dépôt: 87101956.8

(22) Date de dépôt: 12.02.87

(54) Cellule d'affichage.

(30) Priorité: 27.02.86  CH 791/86

(43) Date de publication de la demande:
09.09.87 Bulletin 87/37

(45) Mention de la délivrance du brevet:
31.10.90 Bulletin 90/44

(84) Etats contractants désignés:
DE FR GB NL

(56) Documents cités:
EP-A- 0 131 216
FR-A- 2 152 757
GB-A- 2 023 864
US-A- 4 418 987

PATENT ABSTRACTS OF JAPAN,
vol. 4, no. 118 (P-24)[600], 22 août 1980; &
JP-A-55 73 023 (SUWA SEIKOSHA K.K.) 02-06-1980
PATENT ABSTRACTS OF JAPAN,
vol. 4, no. 184 (P-41)[666], 18 décembre 1980; &
JP-A-55 127 519 (SUWA SEIKOSHA K.K.) 02-10-1980
PATENT ABSTRACTS OF JAPAN,
vol. 8, no. 175 (P-294)[1612], 11 août 1984; &
JP-A-59 69 735 (SEIKOUSHIYA K.K.) 20-04-1984
SID 1984, Digest of technical papers,
vol. 15, page 206-208, R.W. Filas "Hybrid alignment in
.Phase-Change Guest-Host LCDS".

(73) Titulaire: ASULAB S.A., Faubourg du Lac 6,
CH-2501 Bienne(CH)

(72) Inventeur: Grupp, Joachim, Chemin Gabriel 26,
CH-2034 Peseux(CH)

(74) Mandataire: Caron, Gérard et al, ICB Ingénieurs
Conseils en Brevets SA Passage Max. Meuron 6,
CH-2001 Neuchâtel(CH)

## Description

La présente invention se rapporte à une cellule d'affichage à cristaux liquides multiplexable. Cette cellule comporte notamment deux plaques planes et parallèles, l'une avant, l'autre arrière, un cadre interposé entre les plaques et définissant un logement avec les faces internes de ces plaques, un mélange de cristaux liquides nématiques et de composé chiralique placé à l'intérieur dudit logement, deux réseaux d'électrodes de commande solidaires chacun de l'une des faces internes et deux couches d'alignement recouvrant chacune l'une des faces internes. Cette cellule comporte en outre soit un polariseur s'étendant parallèlement aux faces, à l'avant de la plaque avant et un réflecteur-diffuseur placé à l'arrière de la couche d'alignement portée par la plaque arrière, soit deux polariseurs placés de part et d'autre des plaques. Une telle cellule est décrite dans le document FR-A-2 549 268. De telles cellules sont connues sous l'abréviation SBE (de l'anglais Supertwist Birefringence Effect).

Ce type de cellule permet de réaliser un affichage multiplexable à un taux pouvant dépasser 100, grâce au fait que la transmission de la lumière en fonction du champ électrique appliqué est tout d'abord pratiquement constante puis varie brusquement, en croissant ou décroissant selon l'orientation relative des polariseurs et des couches d'alignement. La tension appliquée est en outre très faible. Par ailleurs, ce type de cellule permet d'obtenir un contraste chromatique et un angle de lecture particulièrement grand. Ce résultat est obtenu grâce au fait que le mélange de cristaux liquides a une structure en hélice dont le pas est sensiblement compris entre 0,2 et 1 fois l'épaisseur de la cellule et en ce que, en l'absence de champ électrique, les molécules voisines des plaques forment avec celles-ci un angle appelé communément angle de tilt, de valeur voisine de 25°. Cette structure particulière ne varie pratiquement pas dans une large plage de champ électrique, puis brusquement, lorsque le champ atteint une valeur appelée champ critique, les molécules se trouvant dans la partie médiane de l'espace compris entre les deux plaques s'orientent pour former un angle voisin de 90° avec le plan des plaques.

Ce type de cellule est particulièrement sensible à l'orientation des molécules. Une variation de l'inclinaison des molécules modifie de manière visible la couleur et la transparence de la cellule. Il faut donc, pour obtenir une cellule d'aspect uniforme, que les couches d'alignement induisent un alignement tel que les molécules soient orientées parallèlement les unes aux autres aussi parfaitement que possible.

A ce jour, la méthode la plus fréquemment utilisée en laboratoire pour obtenir un alignement ayant un angle de tilt de 25° consiste à déposer du monoxyde de silicium (SiO) en incidence rasante (environ 5°), les particules de SiO étant projetées avec une incidence constante sur toute la surface des plaques à traiter. Afin de garantir le parallélisme des molécules, l'angle d'ouverture du faisceau est choisi aussi faible que possible (de l'ordre de 0,2°). Ceci conduit à des coûts très élevés qui rendent cette méthode peu propice à une production de masse. C'est pourquoi, à ce jour, ce type de cellule n'a trouvé que des débouchés limités.

Le but de la présente invention est de permettre la réalisation d'une cellule d'affichage à cristaux liquides ayant des caractéristiques voisines de celles du type SBE, mais dont le prix peut être sensiblement plus faible. Ce but est atteint grâce au fait que l'une des couches d'alignement oriente les molécules du mélange en contact avec elle de manière que leur axe optique fasse un angle inférieur ou égal à 10° avec le plan de la plaque adjacente et en ce que l'autre couche d'alignement oriente les molécules en contact avec elle de manière que leur axe optique fasse un angle inférieur ou égal à 10° avec un axe perpendiculaire au plan de la plaque adjacente.

Ce type de cellules présente une similarité de fonctionnement avec les cellules de type SBE du fait que les molécules ont deux structures très différentes l'une de l'autre selon que le champ est légèrement inférieur ou supérieur à sa valeur critique.

Le coût par contre peut être sensiblement réduit par l'usage de techniques plus simples et moins onéreuses.

On sait en effet réaliser des couches d'alignement au moyen de matériaux organiques qui induisent un alignement très voisin de l'horizontale ou de la verticale. Les procédés et les matériaux utilisés seront précisés ci-après. On sait également réaliser des couches d'alignement planaire par lesquelles les molécules sont sensiblement parallèles aux plaques, par dépôt de SiO en incidence oblique (environ 30° par rapport au plan de la plaque).

On connaît certes déjà des cellules dans lesquelles les molécules du mélange de cristaux liquides ont, au voisinage d'une plaque, une orientation parallèle à cette dernière et au voisinage de l'autre plaque une orientation perpendiculaire. Ce type d'alignement est appelé hybride. Lorsque les molécules ne sont pas parfaitement parallèles et/ou respectivement perpendiculaires aux plaques, on parle alors d'un alignement hybride tilté (du mot anglais "Tilt" qui veut dire "incliné").

Une cellule de ce type est décrite dans SID 1984, Digest of technical papers, volume 15, page 206 to 209. Cette cellule, connue sous l'abréviation PCGH (de l'anglais "Phase Change Guest Host"), comporte un mélange de cristaux liquides nématiques, de composé chiralique et de molécules dichroïques. La concentration de composé chiralique est telle qu'il induit un pas légèrement inférieur à la distance entre les plaques. Plus précisément, le rapport entre l'épaisseur d et le pas p est compris entre 1,02 et 2,61.

Une cellule similaire est décrite dans SID 1985, Digest of technical papers, volume 16, page 278. Elle ne diffère de celle décrite ci-dessus que par le fait que le rapport d/p est compris entre 1,6 et 2.

Ce type de cellule se distingue par un bon angle de vue, mais il présente un contraste relativement faible. Il ne peut être utilisé avec un adressage multiplexé classiquement du fait de son comportement bistable.

Une autre famille de cellule présentant un alignement hybride est connu sous l'abréviation HAN (de l'anglais "Hybrid Aligned Nematic"). Une cellule de ce type est décrite dans J. Appl. Phys., volume 47, septembre 1976, pages 3842 à 3845. Cette cellule comporte un mélange de cristaux liquides nématiques intercalé entre deux plaques dont les faces internes sont recouvertes l'une d'une couche d'alignement planaire, l'autre d'une couche d'alignement homéotrope. Deux polariseurs, orientés perpendiculairement l'un par rapport à l'autre sont placés à l'avant, respectivement à l'arrière, de la cellule. Cette cellule travaille en mode BCE (biréfringence contrôlée par un champ électrique). Les caractéristiques physiques de cette cellule sont telles que la variation de la transmission et de la couleur en fonction du champ présente une courbe très plate.

Ce comportement permet de réaliser des cellules pouvant afficher de nombreuses nuances de couleurs. Elles ne sont par contre pas du tout adaptées à un adressage multiplexé classiquement.

D'autres caractéristiques et avantages de l'invention ressortiront de la description détaillée qui va suivre d'exemples de réalisation, description qui sera faite en référence aux dessins sur lesquels :

- la figure 1 est une coupe transversale d'une cellule d'affichage à cristaux liquides selon l'invention, travaillant en transmission;
- la figure 2 représente, en coupe transversale, une cellule selon l'invention travaillant en réflexion;
- la figure 3 montre, en perspective, l'orientation des molécules de cristaux liquides en l'absence de champ électrique, dans la cellule de la figure 1;
- la figure 4a est une vue en coupe d'une cellule dans laquelle les molécules sont schématiquement représentées;
- les figures 4b et 4c représentent des courbes montrant la variation de l'orientation des molécules de cristaux liquides, en fonction de leur position dans l'épaisseur de la couche;
- la figure 5 illustre, de manière schématique et en perspective, la structure d'une cellule telle que représentée à la figure 1, et montre plus particulièrement la manière dont les molécules de cristaux liquides et les polariseurs sont orientés les uns par rapport aux autres; et
- les figures 6 et 7 représentent des courbes de transmission de cellules décrites dans trois exemples.

Sur ces figures, les mêmes éléments portent les mêmes références.

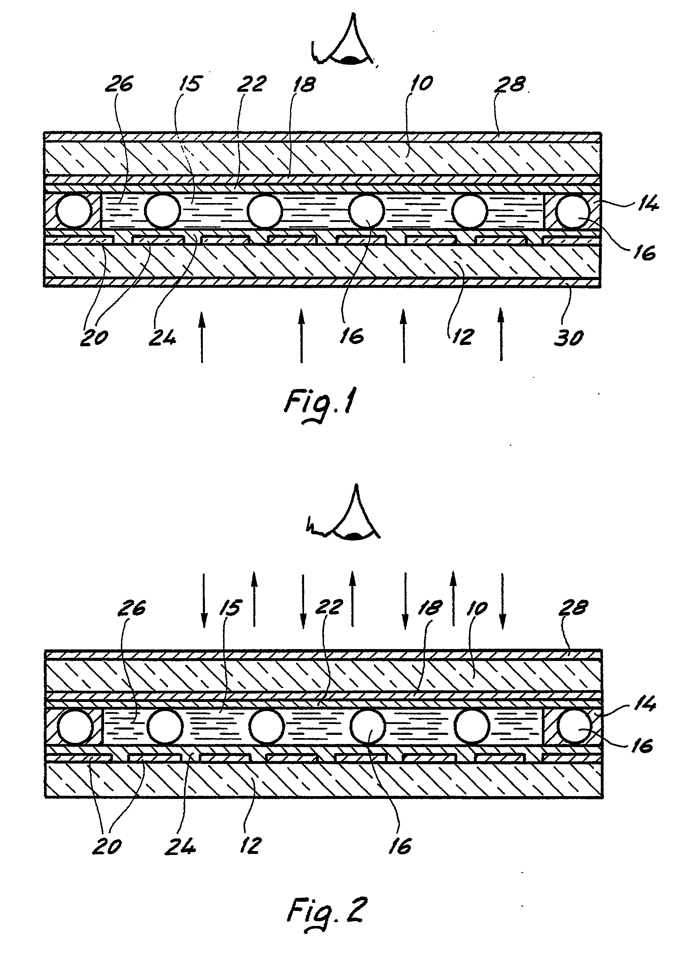

Les cellules d'affichage représentées aux figures 1 et 2 travaillent respectivement en transmission et en réflexion. Elles comportent chacune deux plaques de verre, l'une avant 10 et l'autre arrière 12, séparées par un cadre 14 pour définir un logement 15. Le cadre est avantageusement en colle époxy. La distance entre les plaques est définie par des fibres de verre 16 réparties uniformément dans l'espace compris entre les plaques, tant dans le logement 15 que dans la colle du cadre 14. Les faces internes des plaques 10 et 12 portent chacune un réseau de pistes conductrices 18 et 20. Le réseau 18, transparent, est avantageusement réalisé en oxyde d'indium dopé. Le réseau 20 présente une composition différente selon que la cellule travaille en transmission ou en réflexion. Ces réseaux 18 et 20 sont orthogonaux et définissent une matrice de points destinée à l'affichage d'informations. Les faces internes des plaques 10 et 12, ainsi que les pistes conductrices qu'elles portent, sont recouvertes chacune d'une couche d'alignement 22, respectivement 24. Ces couches d'alignement sont avantageusement réalisées au moyen de matériaux organiques, dont la composition et les caractéristiques seront définies plus précisément ci-après. Le logement 15 est rempli d'un mélange 26 de cristaux liquides dont la composition sera également précisée ci-après.

La cellule de la figure 1, qui travaille en transmission, comporte en outre des polariseurs 28 et 30 placés respectivement à l'avant de la plaque avant 10 et à l'arrière de la plaque arrière 12. Dans ce cas, le réseau de pistes conductrices 20, qui doit être transparent, est également fait en oxyde d'indium dopé.

La cellule de la figure 2, qui travaille en réflexion, ne comporte qu'un polariseur 28. En outre, le réseau 20 de pistes conductrices n'est pas réalisé en un matériau transparent mais au moyen d'un matériau opaque, réfléchissant et diffusant, tel qu'un film d'aluminium mat par exemple. De la sorte, la lumière qui pénètre la cellule d'affichage est renvoyée vers l'avant, pour permettre la lecture par réflexion.

Dans ces cellules, la couche d'alignement 24 est réalisée au moyen de polyimide frotté, qui induit un alignement planaire homogène, c'est-à-dire définissant une direction d'alignement des molécules du mélange se trouvant dans son voisinage parallèle aux plaques. Plus précisément, l'angle d'inclinaison des molécules par rapport aux plaques est environ égal à 1°.

Cette couche d'alignement pourrait également être réalisée par dépôt d'une couche de SiO en incidence oblique (30°). L'angle d'inclinaison des molécules serait aussi sensiblement égal à 1°.

La couche d'alignement 22 est également réalisée au moyen d'un matériau organique. Celui-ci est choisi de manière que la structure des molécules de cristaux liquides dans son voisinage soit de type homéotrope. Ce résultat peut être obtenu par exemple au moyen de l'octadécyldiméthyl [3-(triméthoxysilyl)-propyl] ammoniumchloride, connu sous l'abréviation DMOAP, ou de l'octadécylariéthoxylane, connu sous l'abréviation ODS.

Par ailleurs, le mélange de cristaux liquides peut être réalisé au moyen du produit ZLI 1612 de la firme MERCK (Allemagne), qui présente une anisotropie diélectrique positive, additionné de CB15 de la firme BDH (Grande-Bretagne).

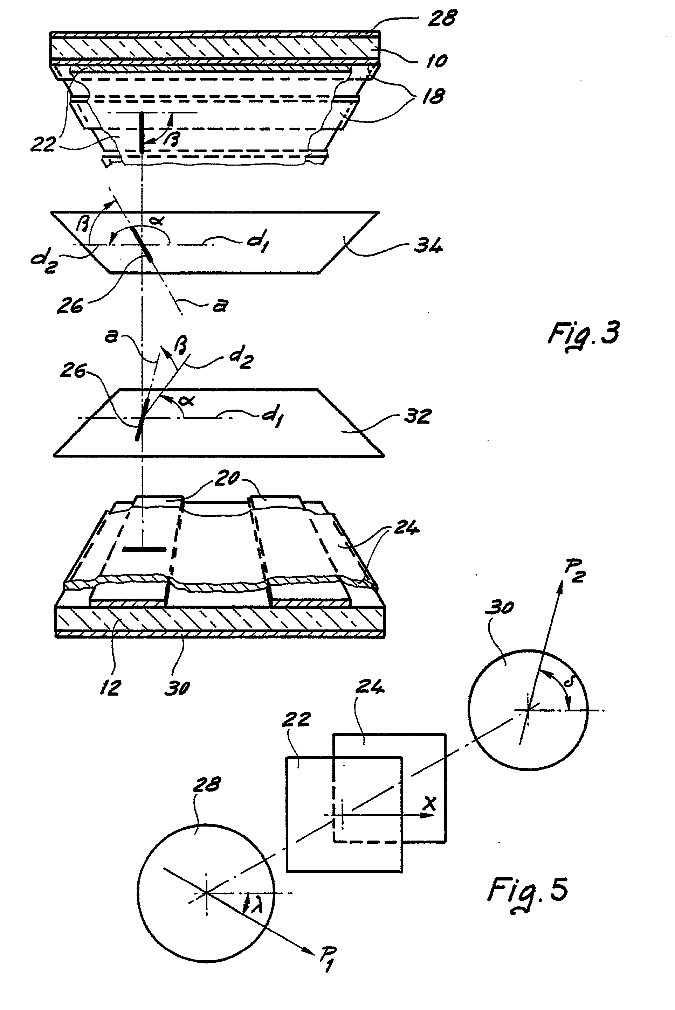

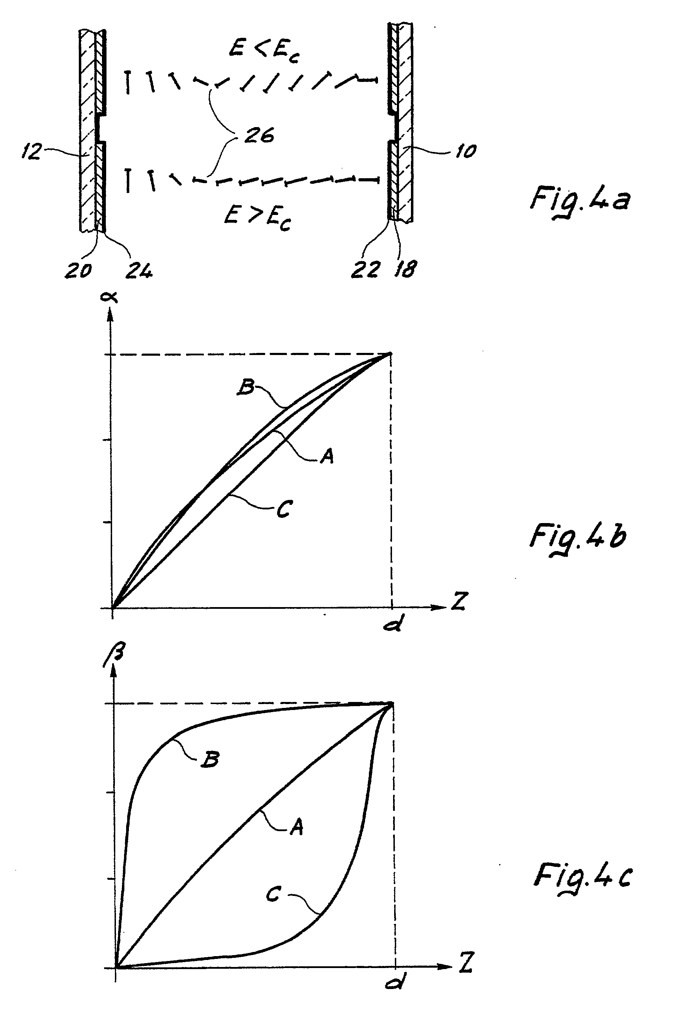

Afin de mieux comprendre le fonctionnement de la cellule, il faut se référer aux figures 3 et 4a qui représentent schématiquement des parties d'une cellule selon l'invention, travaillant en transmission.

Sur la figure 3, on peut voir les plaques de verre 10 et 12, les pistes conductrices 18 et 20, les couches d'alignement 22 et 24, les polariseurs 28 et 30 ainsi que les molécules de cristaux liquides que comporte le mélange 26. Ces molécules sont schématiquement représentées par des cylindres à bout arrondi, d'axe confondu avec leur axe optique. Par ailleurs, et pour mieux comprendre la structure de la cellule, deux plans de projection 32 et 34 placés respectivement au tiers et aux deux-tiers de l'épaisseur de la cellule ont été représentés. Ainsi que cela a été dit précédemment, la couche d'alignement 24 induit un alignement planaire des molécules du mélange se trouvant dans son voisinage, alors que la couche d'alignement 22 induit un alignement homéotrope.

En l'absence de champ électrique ou pour un champ inférieur à une valeur critique et à cause des couches d'alignement et de la présence d'un composé chiralique dans le mélange, les molécules de celui-ci s'organisent dans une structure complexe combinant une structure hélicoïdale autour d'un axe perpendiculaire aux plaques avec une structure telle qu'induite par un alignement hybride.

L'orientation des molécules peut être définie par deux angles $\alpha$ et $\beta$, ainsi qu'on peut le voir sur la figure 3. Pour définir les angles associés à une molécule, on fait passer un plan parallèle au plan des plaques par le centre de la molécule. Ce plan comporte une première droite $d_1$ parallèle à la direction d'alignement planaire et une deuxième droite $d_2$ définie par la projection de l'axe a de la molécule sur le plan. L'angle $\alpha$ est défini par les droites $d_1$ et $d_2$ et l'angle $\beta$ par la droite $d_2$ et l'axe a.

La figure 4a montre une vue en coupe de la cellule, les molécules étant projetées sur le plan de la coupe. On peut y voir les plaques 1O et 12, les pistes conductrices 18 et 2O, les couches d'alignement 22 et 24 ainsi que les molécules du mélange 26, schématiquement représentées par des clous dont la tête se trouve du côté de l'observateur. La partie du haut montre la structure de la cellule lorsque le champ appliqué est inférieur au champ critique, celle du bas lorsque le champ est supérieur au champ critique. Ainsi qu'on peut le voir sur cette figure, les molécules définissent une structure combinant un alignement hélicoïdal autour d'un axe perpendiculaire aux plaques avec une évolution progressive de l'inclinaison, de la plaque 12 où les molécules sont sensiblement parallèles aux plaques, à la plaque 1O où les molécules sont sensiblement perpendiculaires aux plaques.

Lorsque le champ appliqué dépasse le champ critique, ce qui correspond à la partie du bas de la figure 4a, les molécules ont un angle d'inclinaison plus élevé tout en conservant leur alignement hélicoïdal. En d'autres termes, les molécules ont tendance à s'aligner dans la direction du champ électrique.

Pour mieux comprendre la manière dont les molécules sont organisées, on peut se référer aux figures 4b et 4c, qui montrent schématiquement comment varient respectivement $\alpha$ et $\beta$ en fonction de la distance à la plaque arrière 12. Ces courbes ont été tracées de manière empirique à seule fin d'expliquer le principe de fonctionnement de la cellule.

Sur les figures 4b et 4c, les courbes A représentent respectivement la variation de $\alpha$ et $\beta$ en fonction de la distance à la plaque arrière, pour un champ électrique de valeur inférieure au champ critique, qu'il s'agisse d'un mélange présentant une anisotropie diélectrique positive ou négative. Les courbes B et C représentent les variations de $\alpha$ et $\beta$ lorsque le champ électrique est supérieur au champ critique, respectivement pour un mélange de cristaux liquides à anisotropie diélectrique positive et négative.

Ainsi qu'on peut le voir sur la figure 4b, l'angle $\alpha$ varie de manière presque linéaire de la plaque arrière à la plaque avant. Cet angle n'est que peu modifié par l'application d'un champ électrique.

Il n'en est pas de même pour l'angle $\beta$. Certes, lorsque le champ est nul ou inférieur à la valeur critique, l'angle $\beta$ varie de manière presque linéaire. Dans ce cas, $\beta$ moyen est égal à 45°. Mais dès que le champ appliqué dépasse la valeur critique, les molécules tendent à s'orienter parallèlement au champ, lorsque le cristal liquide présente une anisotropie diélectrique positive. Cela revient àdire que la courbe B est incurvée de manière que pour tous Z différents de O et d, $\beta$ est supérieur à ce qu'il était en l'absence de champ. $\beta$ moyen est ainsi supérieur à 45°.

Lorsqu'il s'agit d'un cristal liquide à anisotropie diélectrique négative, dont le comportement est représenté par la courbe C, l'application d'un champ électrique supérieur à la valeur critique incurve la courbe dans l'autre direction, de sorte que la valeur moyenne de $\beta$ est inférieure à 45°.

Étant donné le caractère biréfringent des molécules de cristaux liquides, ce changement de leur orientation modifie les caractéristiques de la lumière polarisée lorsque celle-ci traverse le mélange, comme cela vient d'être dit ci-dessus.

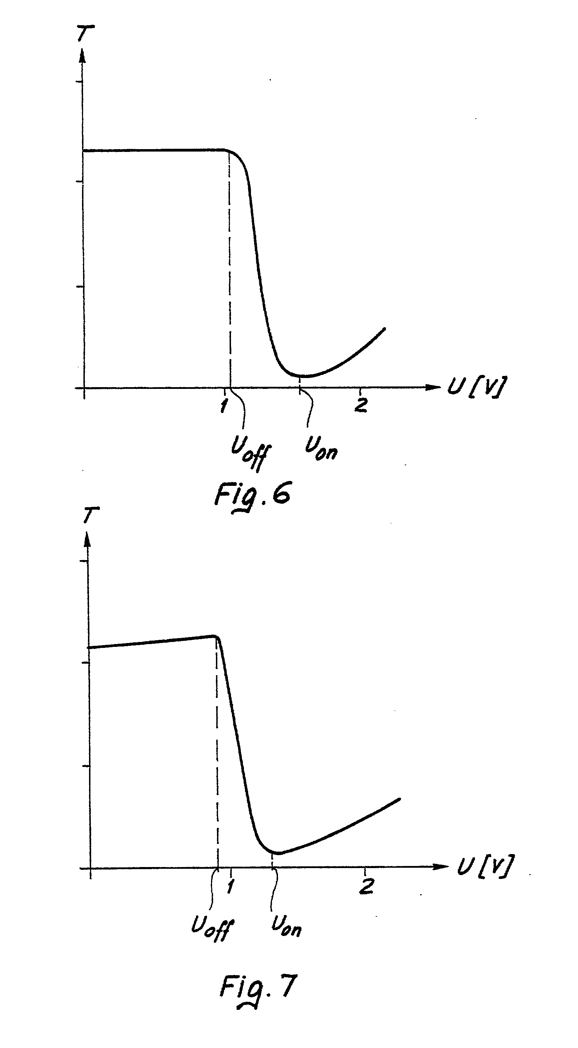

Pour obtenir l'effet maximum, il faut que le ou les polariseurs que comporte la cellule soient orientés de manière précise par rapport à la couche d'alignement planaire. Afin de mieux comprendre cette orientation relative des polariseurs et de la couche d'alignement planaire, on peut se référer à la figure 5 sur laquelle sont représentés les polariseurs 28 et 3O, ainsi que les couches d'alignement 22 et 24. La direction d'alignement de la couche d'alignement planaire 24 est figurée par un axe X, alors que les directions de polarisation des polariseurs 28 et 3O sont représentés par des axes P1 et P2. Comme on peut le voir sur cette figure, les axes P1 et P2 font respectivement avec l'axe X un angle $\lambda$ et $\delta$.

À ce jour, les essais effectués ont permis de réaliser des exemples donnant des résultats intéressants, dont trois sont définis plus précisément ci-après :

Exemple 1

Dans cette cellule, le mélange 26 est réalisé au moyen du produit ZLI 1612, un mélange de cristaux liquides à anisotropie diélectrique positive, additionné de 1,19 % de composé chiralique connu sous le nom de CB 15. Ce composé chiralique induit une rotation du cristal liquide vers la droite. Cette cellule a, dans le mode multiplexé, les caractéristiques suivantes :
$p = 11\ \mu m$
$d = 8\ \mu m$
$U_{on} = 1,55\ V$
$U_{off} = 1,04\ V$

N = 7
c = 34,5
λ = - 27°
δ = - 9°

Dans ce tableau, p représente le pas qu'induit le composé chiralique dans le mélange en l'absence de contraintes, d est la distance entre les plaques, $U_{on}$ est la tension pour laquelle la cellule présente l'aspect le plus sombre, tandis que $U_{off}$ est la tension pour laquelle elle présente l'aspect le plus clair. N est le rapport de multiplexage optimum, c'est-à-dire celui pour lequel le contraste entre les plages activées et désactivées est le plus important et c est le contraste obtenu pour un taux de multiplexage de N. Cette cellule a en outre les caractéristiques suivantes: les couches d'alignement ont été réalisées au moyen de $SiO_x$ (x compris entre 1 et 2). Plus précisément, la couche d'alignement planaire 24 est obtenue en déposant du SiO avec une incidence de 30° par rapport aux plaques. Ce type de dépôt permet d'obtenir un alignement quasi planaire, les molécules ayant au plus une inclinaison de 1° par rapport aux plaques. La couche d'alignement homéotrope est réalisée également avec du $SiO_x$, mais celui-ci est déposé cette fois en incidence rasante, et en soumettant les plaques à un mouvement tournant. Ce type de dépôt permet de réaliser une couche d'alignement induisant une structure quasi-homéotrope, l'angle entre une perpendiculaire aux plaques et la direction d'alignement des molécules étant de l'ordre de 1 à 3°.

La figure 6 représente la variation de la transmission en fonction de la tension appliquée aux bornes des électrodes de la cellule. La transmission est mesurée sur toute la largeur du spectre visible, avec une adaptation à la sensibilité de l'oeil, comme il est d'usage dans ce type de mesure.

Ainsi qu'on peut le voir, cette courbe présente trois parties. Dans une première partie comprise entre O et 1 V environ, la transmission est maximum et pratiquement constante. Dans une deuxième partie comprise entre 1 et 1,5 V, la transmission chute brusquement jusqu'au voisinage de O. Dans la troisième partie de la courbe, pour laquelle la tension est supérieure à 1,5 V, la transmission croît de manière progressive. Seules les première et deuxième parties de cette courbe sont intéressantes. La première partie de la courbe présente une caractéristique pratiquement horizontale. Ce résultat, obtenu de manière empirique, permet de réaliser une cellule dans laquelle les plages qui ne doivent pas être affichées, qu'elles soient ou non soumises à un champ électrique, ont le même contraste. Cette caractéristique est intéressante dans les cellules multiplexées. En effet, dans ce type de cellule, les segments non affichés sont en permanence soumis à un champ électrique non nul appelé $U_{off}$. Si le contraste n'est pas identique à celui que présente une zone non soumise à un champ électrique, les segments non affichés présentent un léger contraste par rapport aux zones non soumises à un champ électrique, ce qui est inesthétique.

A cause de la troisième partie de la courbe, dans laquelle la transmission augmente de manière progressive, ce type de cellule doit avoir une tension d'alimentation $U_{on}$, qui ne doit pas dépasser la valeur correspondant au minimum de la courbe de transmission.

Des essais effectués en plaçant les couches d'alignement planaire ou homéotrope du côté de la cellule par laquelle entre la lumière ont montré des caractéristiques similaires du point de vue de la transmission. En d'autre termes, les angles λ et δ pour lesquels le contraste est optimum ont des valeurs identiques quelle que soit la manière de placer la cellule.

## Exemple 2

La deuxième cellule d'affichage a été réalisée avec du cristal liquide E7 additionné du composé chiralique CB 15, ces deux produits provenant de la firme BDH. La proportion de CB 15 est de 1,76 %. Cette cellule présente les caractéristiques suivantes dans le mode multiplexé :

p = 9,14 μm
d = 6,4 μm
$U_{on}$ = 1,3 V
$U_{off}$ = O,88 V
N = 7
c = 34
λ = O°
δ = + 24°

Cette cellule, travaillant en transmission, comporte la couche d'alignemt homéotrope du côté où entre la lumière.

La couche d'alignement planaire est réalisée au moyen de polyimide déposé par des moyens classiqus faisant notamment intervenir la centrifugation, puis frottée pour définir la direction d'alignement. Cette couche d'alignement définit également un alignement des molécules tel que celles-ci forment un angle de quelques degrés par rapport aux plaques, cet angle étant constant sur toute la surface. La couche d'alignement homéotrope est réalisée au moyen d'une solution contenant essentiellement le produit connu sous le nom de DMOAP, dépsée de manière similaire au polyimide. Les molécules de cristal liquide ont, par rapport à une telle couche d'alignement homéotrope, une orientation perpendiculaire quasi parfaite. La courbe de transmission, en fonction de la tension appliquée, est représentée à la figure 7. Son allure générale est très voisine de celle de la figure 6. Il faut toutefois relever que la première partie de la courbe n'est pas aussi plane que celle de la cellule décrite précédemment. La transmission, en effet, est légèrement plus grange pour le tension $U_{off}$ qu'elle ne l'est pour une tension nulle.

## Exemple 3

La cellule de cet exemple a des caractéristiques identiques à celles de l'exemple 2, exception faite de l'orientation des couches d'alignement, la couche d'alignement planaire se trouvant du côté où entre la lumière. Dans ce cas, il a fallu modifier la position des polariseurs par rapport à la couche d'alignement. L'angle $\lambda$ est ici égal à - 4° et l'angle $\delta$ à - 28°. La courbe de la transmission en fonction de la tension est identique à celle de l'exemple 2 et correspond en conséquence à la figure 7.

Dans les trois exemples décrits, les cellules travaillent en transmission. Il est bien entendu qu'elles peuvent aussi travailler en réflexion.

Pour réaliser de telles cellules, deux solutions sont techniquement envisageables.

Dans la première solution, qui correspond à la cellule décrite en référence à la figure 2, la cellule ne comporte qu'un polariseur placé à l'avant de la cellule. Cette solution ne permet pas d'obtenir un contraste aussi élevé que le permet une cellule travaillant en transmission, car le rôle que jouent les polariseurs d'entrée et de sortie étant, dans ce cas, tenu par un seul polariseur, son orientation ne pourra être qu'un compromis.

Dans la seconde solution envisageable, la cellule comporte deux polariseurs, placés et orientés de la même manière que dans la cellule travaillant en transmission décrite en référence à la figure 1 avec, en supplément, un réflecteur-diffuseur placé à l'arrière du second polariseur. Ici, le contraste est supérieur à celui de la cellule ne comportant qu'un polariseur, mais la luminosité est plus faible. Ceci est dû au fait que la lumière doit traverser un polariseur à quatre reprises et non à deux comme dans le premier exemple.

Ainsi qu'il ressort des exemples ci-dessus, il est possible de réaliser une cellule d'affichage dont le taux de multiplexage peut atteindre 7, et pouvant même dépasser cette valeur, et qui peut être fabriquée industriellement de manière peu coûteuse.

A ce jour, il n'a pas été possible d'établir les règles physiques qui régissent ce type de cellule. Les essais pratiques ont toutefois montré que des résultats satisfaisants pouvaient être obtenus lorsque les axes des molécules de cristal liquide font avec les plaques, dans le voisinage de celles-ci, un angle compris entre 0 et 10° tant par rapport au plan de la plaque au voisinage de la couche d'alignement planaire que par rapport à une perpendiculaire à la plaque au voisinage de la couche d'alignement homéotrope, la plage la plus favorable étant comprise entre 3 et 6°.

Pour réaliser de tels alignements, on sait que l'angle de tilt obtenu par dépôt de polyimide et frottement est compris entre 0 et 6°, selon les conditions de dépôt, de polymérisation et de frottement. On sait aussi réaliser un alignement dont l'angle de tilt est supérieur à 8° par dépôt de SiO en incidence rasante. Ces procédés sont bien connus de l'homme de l'art.

Pour obtenir une inclinaison des molécules se trouvant au voisinage de la plaque portant la couche d'alignement homéotrope, on peut utiliser la méthode décrite par F.C. Saunders et al. dans Mol. Cryst. Liq. Cryst. 1985, vol 122, p. 297-308.

Par ailleurs, il semble avantageux que le polariseur se trouvant au voisinage de la plaque portant la couche d'alignement planaire fasse avec la direction d'alignement de celle-ci un angle compris entre 0 et 15°, alors que les directions d'alignement des polariseurs forment un angle typiquement compris entre 20 et 30°.

Il faut en outre relever que les caractéristiques de la cellule pourront probablement être améliorées par une adaptation de son épaisseur aux caractéristiques de biréfringence du cristal liquide.

Il ressort de ce qui précède que des cellules d'affichage telles que décrites peuvent être fabriquées de façon économique, tout en permettant d'atteindre des taux de multiplexage voisins de 10, avec une tension d'alimentation remarquablement faible. De telles caractéristiques prédisposent ce type de cellules à des applications horlogères, par exemple à la réalisation de montres comportant un affichage à matrice de points. A cela s'ajoute le fait que le contraste est obtenu par des phénomènes de biréfringence, ce qui permet de réaliser des couleurs chatoyantes pouvant conduire à des effets esthétiques remarquables.

## Revendications

1. Cellule d'affichage à cristaux liquides multiplexable, comportant :
   - deux plaques (10, 12) planes et parallèles, l'une avant (10), l'autre arrière (12);
   - un cadre (14) interposé entre les plaques qui définit avec celles-ci un logement (15);
   - un mélange (26) de cristaux liquides nématiques et de composé chiralique placé dans ledit logement;
   - deux réseaux d'électrodes (18, 20) de commande solidaires chacun de la face interne de l'une des plaques;
   - deux couches d'alignement (22, 24) recouvrant chacune l'une desdites faces internes;

   - un polariseur (28) s'étendant parallèlement auxdites faces, situé à l'avant de la plaque avant (10); et
   - un réflecteur-diffuseur placé à l'arrière de la couche d'alignement portée par la plaque arrière; cellule dans laquelle le pas de l'hélice du cristal liquide est supérieur ou égal à la distance entre lesdites plaques (10, 12), caractérisée en ce que l'une (24) des couches d'alignement induit un alignement planaire, orientant les molécules du mélange (26) de manière que leur axe optique fasse un angle inférieur ou égal à 10° avec le plan de la plaque (12) adjacente à cette couche et en ce que l'autre desdites couches d'alignement induit un alignement homéotrope, orientant les molécules du mélange (26) de manière que leur axe optique fasse un angle inférieur ou égal à 10° avec un axe perpendiculaire au plan de la plaque (10) adjacente à cette autre couche.

2. Cellule d'affichage selon la revendication 1, caractérisée en ce que ledit réflecteur-diffuseur est placé à l'arrière de ladite plaque arrière et en ce qu'elle comporte en outre un polariseur, intercalé entre ladite plaque arrière et ledit réflecteur-diffuseur.

3. Cellule d'affichage selon la revendication 1, caractérisée en ce que ledit réflecteur-diffuseur est réalisé au moyen d'une couche d'un matériau opaque et diffusant qui couvre la face interne de la plaque arrière.

4. Cellule d'affichage à cristaux liquides multiplexable, comportant :
- deux plaques (10, 12) planes et parallèles, l'une avant (10), l'autre arrière (12);
- un cadre (14) interposé entre les plaques qui définit avec celles-ci un logement (15);
- un mélange (26) de cristaux liquides nématiques et de composé chiralique placé dans ledit logement;
- un premier réseau d'électrodes (18) de commande transparentes, solidaire de la face interne de la plaque avant;
- un second réseau d'électrodes (20) de commande opaques, solidaire de la face interne de la plaque arrière et servant de réflecteur-diffuseur de la lumière;
- deux couches d'alignement (22, 24) recouvrant chacune l'une desdites faces internes; et
- un polariseur (28) s'étendant parallèlement auxdites faces, situé à l'avant de la plaque avant (10);
cellule dans laquelle le pas de l'hélice du cristal liquide est supérieur ou égal à la distance entre lesdites plaques (10, 12), caractérisée en ce que l'une (24) des couches d'alignement induit un alignement planaire, orientant les molécules du mélange (26) de manière que leur axe optique fasse un angle inférieur ou égal à 10° avec le plan de la plaque (12) adjacente à cette couche et en ce que l'autre desdites couches d'alignement induit un alignement homéotrope, orientant les molécules du mélange (26) de manière que leur axe optique fasse un angle inférieur ou égal à 10° avec un axe perpendiculaire au plan de la plaque (10) adjacente à cette autre couche.

5. Cellule d'affichage à cristaux liquides multiplexable, comportant :
- deux plaques (10, 12) planes et parallèles, l'une avant (10), l'autre arrière (12);
- un cadre (14) interposé entre les plaques qui définit avec celles-ci un logement (15);
- un mélange (26) de cristaux liquides nématiques et de composé chiralique placé dans ledit logement;
- deux réseaux d'électrodes (18, 20) de commande solidaires chacun de la face interne de l'une des plaques;
- deux couches d'alignement (22, 24) recouvrant chacune l'une desdites faces internes; et
- des premier et second polariseurs (28, 30) s'étendant parallèlement auxdites faces, respectivement placés l'un à l'avant de la plaque avant (10) et l'autre à l'arrière de la plaque arrière (12);
cellule dans laquelle le pas de l'hélice du cristal liquide est supérieur ou égal à la distance entre lesdites plaques (10, 12), caractérisée en ce que l'une des couches d'alignement induit un alignement planaire, orientant les molécules du mélange (26) de manière que leur axe optique fasse un angle inférieur ou égal à 10° avec le plan de la plaque (12) adjacente à cette couche et en ce que l'autre (24) desdites couches d'alignement induit un alignement homéotrope, orientant les molécules du mélange (26) de manière que leur axe optique fasse un angle inférieur ou égal à 10° avec un axe perpendiculaire au plan de la plaque (10) adjacente à cette autre couche.

6. Cellule d'affichage selon l'une des revendications 1 à 5, caractérisée en ce que le pas de l'hélice est compris entre 0,5 et 1 fois la distance entre les plaques.

7. Cellule d'affichage selon l'une des revendications 1 à 6, caractérisée en ce que, dans le voisinage de la plaque (10) recouverte de la couche (22) d'alignement homéotrope, ledit axe optique fait un angle compris entre 3 et 6° avec un axe perpendiculaire au plan de cette plaque (10).

8. Cellule d'affichage selon l'une des revendications 1 à 7, caractérisée en ce que, dans le voisinage de la plaque (12) recouverte de la couche (24) d'alignement planaire, ledit axe optique fait un angle compris entre 3 et 6° avec le plan de cette plaque (12).

9. Cellule d'affichage selon l'une des revendications 1 à 8, caractérisée en ce que ledit mélange de cristaux liquides présente une anisotropie diélectrique positive.

**Claims**

1. Multiplexable display cell using liquid crystals including :
- two plane and parallel plates (10, 12) one (10) in front the other (12) at the rear;
- a frame (14) located between the plates which with the latter defines a chamber (15);
- a mixture (26) of nematic liquid crystals and a chiralic compound within said chamber:
- two networks (18, 20) of control electrodes each fixed to the inner surface of one of the plates;
- two alignment layers (22, 24) each covering one of the inner surfaces;
- a polariser (28) extending parallel to said surfaces located in front of the front plate (10); and
- a reflector-diffuser located at the back of the alignment layer borne by the rear plate;
in which cell the helical pitch of the liquid crystal is greater than the distance between said plates (10, 12), characterized in that one (24) of the alignment layers induces a planar alignment orienting the molecules of the mixture (26) in a manner such that their optical axis forms an angle less than or equal to 10° with the plane of the plate (12) adjacent to said layer and in that the other of said alignment layers induces a homeotropic alignment orienting the molecules of the mixture (26) in a manner such that their optical axis forms an angle less than or equal to 10° with an axis perpendicular to the plane of the plate (10) adjacent to said other layer.

2. Display cell according to claim 1, characterized in that said reflector-diffuser is located at the back of said rear plate and in that it includes furthermore a polariser inserted between said rear plate and said reflector-diffuser.

3. Display cell according to claim 1, characterized in that said reflector-diffuser is obtained by means of a layer of opaque and diffusing material which covers the inner surface of the rear plate.

4. Multiplexable display cell using liquid crystals including :

- two plane and parallel plates (10, 12) one (10) in front the other (12) at the rear;
- a frame (14) located between the plates which with the latter defines a chamber (15);
- a mixture (26) of nematic liquid crystals and a chiralic compound within said chamber;
- a first network (18) of transparent control electrodes fixed to the inner surface of the front plate;
- a second network (20) of opaque control electrodes fixed to the inner surface of the rear plate and serving as a reflector-diffuser of light;
- two alignment layers (22, 24) each covering one of said inner surfaces; and
- a polariser (28) extending parallel to said surfaces situated in front of said front plate (10);

in which cell the helical pitch of the liquid crystal is greater than the distance between said plates (10, 12), characterized in that one (24) of the alignment layers induces a planar alignment orienting the molecules of the mixture (26) in a manner such that their optical axis forms an angle less than or equal to 10° with the plane of the plate (12) adjacent to said layer and in that the other of said alignment layers induces a homeotropic alignment orienting the molecules of the mixture (26) in a manner such that their optical axis forms an angle less than or equal to 10° with an axis perpendicular to the plane of the plate (10) adjacent to said other layer.

5. Multiplexable display cell using liquid crystals including :

- two plane and parallel plates (10, 12) one (10) in front the other (12) at the rear;
- a frame (14) located between the plates which with the latter defines a chamber (15);
- a mixture (26) of nematic liquid crystals and a chiralic compound within said chamber;
- two networks (18, 20) of control electrodes each fixed to the inner surface of one of the plates;
- two alignment layers (22, 24) each covering one of the inner surfaces;
- first and second polarisers (28, 30) extending parallel to said surfaces, one being located in front of the front plate (10) and the other on the back of the rear plate (12);

in which cell the helical pitch of the liquid crystal is greater than the distance between said plates (10, 12), characterized in that one of the alignment layers induces a planar alignment orienting the molecules of the mixture (26) in a manner such that their optical axis forms an angle less than or equal to 10° with the plane of the plate (12) adjacent to said layer and in that the other (24) of said alignment layers induces a homeotropic alignment orienting the molecules of the mixture (26) in a manner such that their optical axis forms an angle less than or equal to 10° with an axis perpendicular to the plane of the plate (10) adjacent to said other layer.

6. Display cell according to any of claims 1 to 5, characterized in that the helical pitch is in a range comprised between 0.5 and 1 times the distance between said plates.

7. Display cell according to any of claims 1 to 6, characterized in that the vicinity of the plate (10) covered with the homeotropic alignment layer (22) said optical axis forms an angle of between 3° and 6° with an axis perpendicular to the plane of said plate (10).

8. Display cell according to any of claims 1 to 7, characterized in that the vicinity of the plate (12) covered with the planar alignment layer (24) said optical axis forms an angle of between 3° and 6° with the plane of said plate (12).

9. Display cell according to any of claims 1 to 8, characterized in that said mixture of liquid crystals exhibits a positive dielectric anisotropy.

**Patentansprüche**

1. Multiplexierbare Flüssigkristall-Anzeigezelle, umfassend:

– zwei ebene und parallele Platten (10, 12), eine vordere (10) und eine hintere (12),
– einen zwischen den Platten angeordneten Rahmen (14), der mit diesen eine Ausnehmung (15) begrenzt,
– ein Gemisch (26) von nematischen Flüssigkristallen und einer chiralen Komponente in der Ausnehmung,
– zwei Netze von Steuerelektroden (18, 20), jeweils verbunden mit der Innenseite einer der Platten,
– zwei Ausrichtschichten (22, 24), von denen jede eine der Innenseiten bedeckt,
– einen vor der vorderen Platte (10) parallel zu den Seiten sich erstreckenden Polarisator (28) und
– einen Reflektor-Diffusor, plaziert hinter der von der hinteren Platte getragenen Ausrichtschicht,

bei welcher Zelle die Schraubensteigung des Flüssigkristalls größer oder gleich dem Abstand zwischen den Platten (10, 12) ist, dadurch gekennzeichnet, daß eine (24) der Ausrichtschichten eine planare Ausrichtung bewirkt, bei der die Moleküle des Gemischs (26) derart orientiert werden, daß ihre optische Achse einen Winkel kleiner oder gleich 10° mit der Ebene der Platte (12) nahe dieser Schicht bildet und daß die andere Ausrichtschicht eine homöotrope Ausrichtung bewirkt, bei der die Moleküle des Gemischs (26) derart orientiert werden, daß ihre optische Achse einen Winkel kleiner oder gleich 10° mit einer Achse bildet, die senkrecht ist zu der Ebene der Platte (10) nahe dieser anderen Schicht.

2. Anzeigezelle nach Anspruch 1, dadurch gekennzeichnet, daß der Reflektor-Diffusor hinter der hinteren Platte plaziert ist und daß diese ferner einen Polarisator umfaßt, eingefügt zwischen der hinteren Platte und dem Reflektor-Diffusor.

3. Anzeigezelle nach Anspruch 1, dadurch gekennzeichnet, daß der Reflektor-Diffusor mittels einer Schicht aus opakem und diffundierendem Material realisiert ist, die die Innenseite der hinteren Platte bedeckt.

4. Multiplexierbare Flüssigkristall-Anzeigezelle, umfassend:
- zwei ebene und parallele Platten (10, 12), eine vordere (10) und eine hintere (12),
- einen zwischen den Platten angeordneten Rahmen (14), der mit diesen eine Ausnehmung (15) begrenzt,
- ein Gemisch (26) von nematischen Flüssigkristallen und einer chiralen Komponente in der Ausnehmung,
- ein erstes Netz von transparenten Steuerelektroden (18), verbunden mit der Innenseite der vorderen Platte,
- ein zweites Netz von opaken Steuerelektroden (20), verbunden mit der Innenseite der hinteren Platte und als Reflektor-Diffusor des Lichts dienend,
- zwei Ausrichtschichten (22, 24), von denen jede eine der Innenseiten bedeckt,
- einen vor der vorderen Platte (10) parallel zu den Seiten sich erstreckenden Polarisator (28),

bei welcher Zelle die Schraubensteigung des Flüssigkristalls größer oder gleich dem Abstand zwischen den Platten (10, 12) ist, dadurch gekennzeichnet, daß eine (24) der Ausrichtschichten eine planare Ausrichtung bewirkt, bei der die Moleküle des Gemischs (26) derart orientiert werden, daß ihre optische Achse einen Winkel kleiner oder gleich 10° mit der Ebene der Platte (12) nahe dieser Schicht bildet und daß die andere Ausrichtschicht eine homöotrope Ausrichtung bewirkt, bei der die Moleküle des Gemischs (26) derart orientiert werden, daß ihre optische Achse einen Winkel kleiner oder gleich 10° mit einer Achse bildet, die senkrecht ist zu der Ebene der Platte (10) nahe dieser anderen Schicht.

5. Multiplexierbare Flüssigkristall-Anzeigezelle, umfassend:
- zwei ebene und parallele Platten (10, 12), eine vordere (10) und eine hintere (12),
- einen zwischen den Platten angeordneten Rahmen (14), der mit diesen eine Ausnehmung (15) begrenzt,
- ein Gemisch (26) von nematischen Flüssigkristallen und einer chiralen Komponente in der Ausnehmung,
- zwei Netze von Steuerelektroden (18, 20), jeweils verbunden mit der Innenseite einer der Platten,
- zwei Ausrichtschichten (22, 24), von denen jede eine der Innenseiten bedeckt,
- und einen ersten und einen zweiten Polarisator (28, 30), die sich parallel zu den Seiten erstrecken und einer vor der vorderen Platte (10) und der andere hinter der hinteren Platte (12) plaziert ist,

bei welcher Zelle die Schraubensteigung des Flüssigkristalls größer oder gleich dem Abstand zwischen den Platten (10, 12) ist, dadurch gekennzeichnet, daß eine der Ausrichtschichten eine planare Ausrichtung bewirkt, bei der die Moleküle des Gemischs (26) derart orientiert werden, daß ihre optische Achse einen Winkel kleiner oder gleich 10° mit der Ebene der Platte (12) nahe dieser Schicht bildet und daß die andere Ausrichtschicht (24) eine homöotrope Ausrichtung bewirkt, bei der die Moleküle des Gemischs (26) derart orientiert werden, daß ihre optische Achse einen Winkel kleiner oder gleich 10° mit einer Achse bildet, die senkrecht ist zu der Ebene der Platte (10) nahe dieser anderen Schicht.

6. Anzeigezelle nch einem der Ansprüche 1 bis 5, dadurch gekennzeichnet, daß die Schraubensteigung zwischen dem 0,5- und dem einfachen des Abstands zwischen den Platten liegt.

7. Anzeigezelle nach einem der Ansprüche 1 bis 6, dadurch gekennzeichnet, daß nahe der Platte (10), die mit der homöotropen Ausrichtschicht (22) bedeckt ist, die optische Achse einen Winkel zwischen 3 und 6° mit einer zur Ebene dieser Platte (10) senkrechten Achse einschließt.

8. Anzeigezelle nach einem der Ansprüche 1 bis 7, dadurch gekennzeichnet, daß nahe der Platte (12), die mit der Planar-Ausrichtschicht (24) bedeckt ist, die optische Achse einen Winkel zwischen 3 und 6° mit der Ebene dieser Platte (12) einschließt.

9. Anzeigezelle nach einem der Ansprüche 1 bis 8, dadurch gekennzeichnet, daß das Gemisch der Flüssigkristalle eine positive dielektrische Anisotropie aufweist.

Fig.1

Fig.2

Fig.3

Fig.5

Fig.4a

Fig.4b

Fig.4c

Fig. 6

Fig. 7